# EUROPÄISCHE PATENTSCHRIFT

(11) **EP 1 963 211 B1**
(45) Veröffentlichungstag und Bekanntmachung des Hinweises auf die Patenterteilung: **28.04.2010**
(21) Anmeldenummer: 07856743.5
(22) Anmeldetag: 14.12.2007
(51) Int. Cl.: B65G 17/00, B65G 47/68

(54) **VORRICHTUNG ZUM ZUSAMMENFÜHREN VON GEBINDEN, WIE KLEINCONTAINERN OD. DGL.**
APPARATUS FOR BRINGING TOGETHER CONTAINERS, SUCH AS SMALL CONTAINERS OR THE LIKE
DISPOSITIF POUR REGROUPER DES RÉCIPIENTS, COMME DES PETITS CONTENEURS OU ANALOGUES

(30) Priorität: 13.01.2007 DE 102007001973
(43) Veröffentlichungstag der Anmeldung: 03.09.2008
(73) Patentinhaber: KHS AG, 44143 Dortmund (DE)
(72) Erfinder: RIPKENS, Hans-Gerd, 45574 Goch (DE); NITSCH, Thomas, 47533 Kleve (DE); DÜPPER, Josef, 47551 Bedburg-Hau (DE)
(86) Internationale Anmeldenummer: PCT/EP2007/011005
(87) Internationale Veröffentlichungsnummer: WO 2008/083816

(56) Entgegenhaltungen:
- EP-A- 0 492 922
- US-A- 3 774 748
- US-A- 4 138 008
- US-A- 4 946 022
- US-B1- 6 419 073

## Beschreibung

Die Erfindung richtet sich auf eine Vorrichtung zum Zusammenführen von Gebinden der im Oberbegriff des Anspruches 1 angegebenen Gattung.

Es ist bekannt (vgl. z.B. US-A-3 774 748 oder EP-A-492 922), Gebinde, die auf unterschiedlichen Zuführbahnen angefördert werden, über Zusammenführvorrichtungen zu weiteren Transporteinheiten zusammenzufassen. Eine derartige Zusammenführungsvorrichtung besteht häufig aus einer Vielzahl von randseitig kettengeführten Transportstangen, die endlos umlaufen und auf den bzw. zwischen denen Tragplatten verschiebbar angeordnet sind. Dabei wird, sind z.B. zwei Zuführbahnen angeschlossen, einer Zuführbahn immer eine gewisse Anzahl von Tragplatten des Förderers zugeordnet und auf Lücke dazu auf der anderen Seite eine entsprechende Anzahl von Tragplatten für die Transportbehälter, wobei die Transportplatten derart seitlich verschiebbar sind, dass sie am Ende der Zusammenführungsbahn, wenn die Gebinde an eine einspurige Weitertransportbahn übergeben werden, einen geschlossenen Verband bilden, der im Untertrum wieder zu Teilplattenbereichen getrennt wird.

Ein besonderer Nachteil der bekannten Vorrichtung besteht darin, dass durch das seitliche Verschieben der Transportplatten ein darauf liegendes und mehrere Platten berührendes Transportgut, wie ein Kleincontainer, oder eine Verpakkungseinheit, wie ein Karton od. dgl., um einen gewissen Betrag verdreht wird, so dass er am Ausgang der Zusammenführeinheit nicht mehr in dem Winkel durch die weiterführende Bahn übergeben werden kann, in der ursprünglich angeliefert wurde, so dass zusätzliche Verschwenkeinheiten für die Gebinde nachfolgend vorgesehen werden müssen, um sie in die gewünschte Weitertransportposition zu bringen.

Ein weiterer Nachteil der bekannten Lösung besteht darin, dass die abschnittweise jeder Bahn zugeordneten Tragplatten eine Gesamtfläche jeweils bieten müssen, die der größtmöglichen Grundfläche der zu transportierenden Produkte entspricht. Werden beispielsweise sehr viel kleinere Gebinde zusammengeführt, werden große ungenutzte Auflageflächen bewegt, so dass sich die Förderkapazität immer nach dem größtmöglichen Objekt richtet und damit häufig viel zu langsam gewählt werden muss.

Aufgabe der Erfindung ist die Schaffung einer Lösung, mit der zum einen ein Verdrehen des angeförderten Objektes zwischen Abgabe auf die Zusammenführvorrichtung und nachfolgende Abgabe auf die weiterführende Transportvorrichtung vermieden wird, wobei gleichzeitig eine einfache Anpassung an unterschiedlich große zu verarbeitende Gebinde gewährleistet ist.

Bei einer Vorrichtung der eingangs bezeichneten Art wird diese Aufgabe gemäß der Erfindung durch die kennzeichnenden Merkmale des Anspruches 1 gelöst.

Somit zeichnet sich die Erfindung dadurch aus, dass wenigstens ein Teil der Tragplatten mit auswechselbaren Eingriffselementen in die Führungsschienen versehen ist und dass benachbarte Tragplatten mit Fixiermitteln zur Bildung von größeren Tragplatteneinheiten aneinander ausgerüstet sind, womit gewährleistet ist, dass aus einer Reihe von Tragplatten Transporteinheiten der gewünschten Größe zusammenstellbar sind und eine der Tragplatten, im Regelfalle diejenige, die etwa im Flächenschwerpunktbereich mit einem Eingriffselement versehen ist, das die seitliche Verschiebung durch Kontakt mit den Führungsschienen gewährleistet. Damit wird eine Gesamtflächeneinheit bewegt, ohne dass sich deren relative Positionen der einzelnen Flächenelemente zueinander versetzt; so dass es auch nicht zu einem Verdrehen des auf der Fläche befindlichen Objektes kommen kann.

Ausgestaltungen der Erfindung ergeben sich aus den Unteransprüchen. Dabei kann es zweckmäßig sein, auswechselbare Eingriffselemente an den Tragplatten vorzusehen, z.B. Zapfen, die direkt von der Oberseite durch die entsprechenden Tragplatten gesteckt werden und beispielsweise über einen Bajonettverschluss im entsprechenden Element der Tragplatte verrastbar sind. Eine solche Möglichkeit ist dann von Vorteil, wenn es nicht sehr häufig zu Umrüstungen der Plattengrößen kommt, so dass hier von Hand eine entsprechende Umrüstung vorgenommen werden kann.

Eine andere Möglichkeit besteht darin, z.B. die Eingriffselemente von der Unterseite der Tragplatten als ausschwenkbare Führungsarme auszubilden, die so ausgestaltet sein können, dass sie etwa mit Handhabungsansätzen zum automatischen Ein- bzw. Ausschwenken versehen sind.

Um einzelne Tragplatten zu größeren Einheiten zusammenzuschließen, ist auch vorgesehen, dass zur Fixierung entsprechende z.B. U-förmige Fixierklammern vorgesehen sind, die seitlich einsteckbar sind.

Auch bei dieser Gestaltung kann vorgesehen sein, dass die Fixierklammern Handhabungsansätze aufweisen, um eine Manipulation durch Roboter zu ermöglichen, die beispielsweise automatisch die Klammern der gewünschten Anzahl am Beginn der Zusammenführstation entsprechend setzen und am Ende der Zusammenführstation wieder entfernen.

Jede Tragplatte kann erfindungsgemäß z.B. mit einer Kennzeichnung, wie einem Barcode od. dgl., versehen sein, um über ein entsprechendes Rechenprogramm jeweils die einzelnen Tragplatten nach den angeförderten Objekten sich ausrichtenden Flächeneinheiten automatisch zusammenstellen zu können.

Weitere Merkmale, Einzelheiten und Vorteile der Erfindung ergeben sich aufgrund der nachfolgenden Beschreibung sowie anhand der Zeichnung. Diese zeigt in
- Fig. 1: eine Aufsicht auf eine Zusammenführstation nach der Erfindung,
- Fig. 2: eine Aufsicht einer Zusammenführungsstation mit einer Anordnung der einzelnen Tragplatten nach dem Stand der Technik,
- Fig. 3: eine vereinfachte Ausrisszeichnung eines Teiles eines Tragplattenverbandes in räumlicher Darstellung sowie in
- Fig. 4: eine vereinfachte stirnseitige Ansicht eines Tragplattenverbandes, teilweise aufgeschnitten.

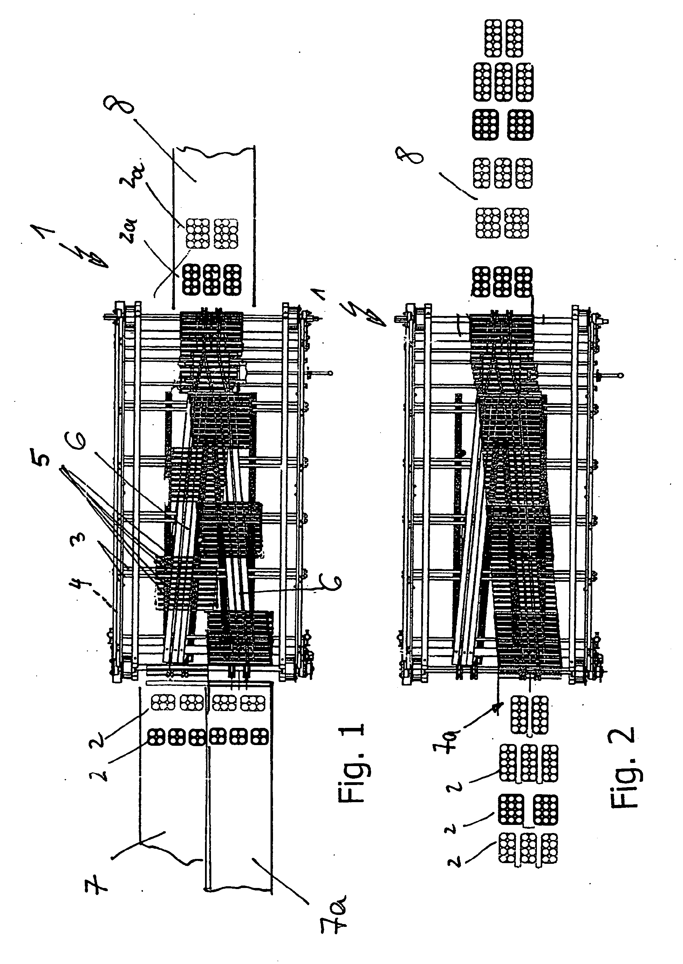

Die allgemein mit 1 bezeichnete Vorrichtung zum Zusammenführen von Gebinden 2 zu Weitertransporteinheiten 2a wird im Wesentlichen von einem Stangen-/Kettenförderer gebildet, bei dem im Endlosumlauf eine Vielzahl von Stangen 3 in paralleler Ausrichtung zueinander quer zur Förderrichtung vorgesehen sind, die außenrandseitig über in den Figuren nicht näher dargestellte Ketten 4 angetrieben werden. Von den Stangen 3 ist in den Fig. 1 und 2 nur ein Teil wiedergegeben.

Zwischen den Stangen oder auf den Stangen sind einzelne getrennte Tragplatten 5 quer verschiebbar positioniert, die ins Innere der Vorrichtung 1 weisende Führungen tragen, die über im Winkel zueinander positionierte Führungs- bzw. Spurschienen 6 von einer in Fig. 1 links dargestellten außenrandseitigen Position in eine in Fig. 1 rechts dargestellte zentrische Position verschiebbar sind, derart, dass die Gebinde 2 von einer ersten zuführenden Bahn 7 bzw. 7a so zusammengeschoben werden, dass sie auf der zentrischen Transportbahn 8 weitertransportierbar sind.

In Fig. 2 ist dargestellt, wie die Gebinde 2 von der (in Fig. 2 unten dargestellten) Zuführbahn 7a auf die weiterführende Bahn 8 auf einem geschlossen Verband aus zusammen geführten Tragplatten transportiert werden, wobei nach dem Stand der Technik jede Tragplatte mit einer nach innen weisenden Führung versehen ist, so dass die Transportbahn die in Fig. 2 dargestellte schräge Konfiguration aufweist. Im Untertrum kann dieser Verband gelöst werden und etwa auf eine neue Position gebracht werden, so dass z.B. von der in Fig. 2 nicht dargestellten oberen Zuführbahn 7 mehrere Produkte übernommen und weitertransportiert werden können.

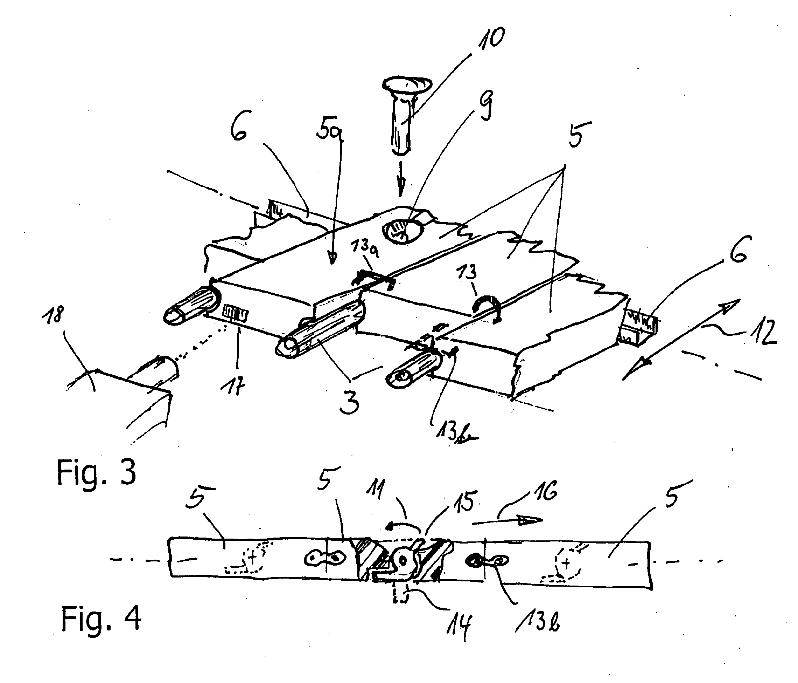

Ohne dass die Erfindung im Einzelnen auf diese Ausgestaltungen beschränkt wäre, zeigt Fig. 3 einen Teil von Tragplatten 5, die auf den Förderstangen 3 verschiebbar gelagert sind, wobei eine der Tragplatten 5, speziell in Fig. 3 mit 5a bezeichnet, durch eine zentrische Bohrung 9 mittels eines Spurzapfens 10 in einer im Inneren der Vorrichtung 1 befindlichen U-förmigen Führungs- bzw. Spurschiene 6 derart fixierbar ist, dass sich die Tragplatten durch die Spurschiene 6 seitlich verschieben lassen. Diese Verschiebungsmöglichkeit ist mit einem Doppelpfeil 12 angedeutet.

Damit der Gesamtverband mit einer bestimmten Anzahl von Tragplatten 5 dieser aufgezwungenen Bewegung folgen kann, sind die individuellen Tragplatten 5 je nach gewünschter Anzahl über Fixiermittel 13a, 13b oder 13c aneinander wenigstens für den jeweiligen Transportweg fixiert.

An dieser Stelle sei bemerkt, dass die Fixiermittel 13 bis 13b in Fig. 3 lediglich Beispiele darstellen, hier können auch andere Mittel vorgesehen sein, etwa mechanisch in den Längsstirnseiten einschwenkende Verhakungen od. dgl.

In Fig. 4 ist noch angedeutet, dass z.B. statt eines Spurzapfens 10 auch ein in die Führungsspurschienen 6 einschwenkender Arm 14 vorgesehen sein kann, der beispielsweise ein automatisches Einschwenken und Ausschwenken ermöglicht, etwa wenn ein mechanisches Greifmittel einen Schwenkeinsatz 15 ergreift und bei der Weiterführung des Verbandes in Richtung des Pfeiles 16 umschwenkt, was mit einem Pfeil 11 angedeutet ist, wobei in gleicher Weise ein Rückschwenken bei all denjenigen Transportplatten 5 möglich ist, die zum jeweiligen Verband aneinander gekoppelt sind.

Zur Automatisierung kann auch vorgesehen sein, dass die Stirnseiten jeder Tragplatte mit einer Kennzeichnung, z.B. einem Barcode 17, ausgerüstet ist, der von einem Lesegerät 18 in ein Datenverarbeitungsprogramm eingelesen werden kann, um die weitere automatische Steuerung zu unterstützen.

Natürlich sind die beschriebenen Ausführungsbeispiele der Erfindung noch in vielfacher Hinsicht abzuändern, ohne den Grundgedanken zu verlassen. Wird beispielsweise eine Mehrzahl von parallel angeordneten Führungsschienen 6 vorgesehen, kann auch mehr als eine der Tragplatten Führungselemente zur aktiven Seitenverschiebung in die unterschiedlichen Spurschienen einschwenken, um das seitliche Verschieben insbesondere bei schweren zu transportierenden Objekten störungsfrei zu gewährleisten.

### Bezugszeichenliste:

- 1: Vorrichtung
- 2: Gebinde
- 2a: Weitertransporteinheit
- 3: Stangen
- 4: Kette
- 5: Tragplatte
- 5a: Tragplatte
- 6: Führungs-/Spurschiene
- 7: Zuführbahn
- 7a: Zuführbahn
- 8: Weitertransportbahn
- 9: Bohrung
- 10: Spurzapfen
- 11: Pfeil
- 12: Doppelpfeil
- 13a: Fixiermittel
- 13b: Fixiermittel
- 13c: Fixiermittel
- 14: Arm
- 15: Schwenkeinsatz
- 16: Pfeil
- 17: Barcode
- 18: Lesegerät

## Patentansprüche

1. Vorrichtung (1) zum Zusammenführen von Gebinden (2), wie beispielsweise Verpackungseinheiten, Kleincontainern, Aufnahmetrays od. dgl., mit wenigstens zwei die zusammenzuführenden Gebinde (2) zuführenden Bahnen (7,7a) und einer die Gebinde (2) weitertransportierenden Bahn (8), wobei die Vorrichtung (1) mit außenrandseitig kettengeführten Stangen (3) im Endlosumlauf ausgerüstet ist und mit auf und/oder zwischen den Stangen (3) angeordneten, verschiebbaren Tragplatten (5), wobei zwischen dem Obertrum und dem Untertrum des umlaufenden Ketten-/Stangenförderers Führungsschienen (6) od. dgl. zur Ausübung einer Querbewegung der einzelnen Tragplatten (5) vorgesehen sind,
**dadurch gekennzeichnet,**
**dass** wenigstens ein Teil der Tragplatten (5) mit auswechselbaren Eingriffselementen (10, 14) in die Führungsschienen (6) versehen ist und dass benachbarte Tragplatten (5) mit Fixiermitteln (13) zur Bildung von größeren Tragplatteneinheiten aneinander ausgerüstet sind.

2. Vorrichtung nach Anspruch 1,
**dadurch gekennzeichnet,**
**dass** die auswechselbaren Eingriffselemente an den Tragplatten (5a) als in querschnittlich U-förmige Führungsschienen (6) eingreifende Zapfen (10) ausgebildet sind.

3. Vorrichtung nach Anspruch 1 oder 2,
**dadurch gekennzeichnet,**
**dass** die auswechselbaren Eingriffselemente als von der Oberseite der Tragplatten (5a) durchsteckbare Zapfen (10) mit einem Befestigungskopf, beispielsweise einem Bajonettverschluss, ausgebildet sind.

4. Vorrichtung nach Anspruch 1 oder einem der folgenden,
**dadurch gekennzeichnet,**
**dass** die Eingriffselemente als von der Unterseite der Tragplatten (5) ausschwenkbare oder in diese einschwenkbare Führungsarme (14) ausgebildet sind.

5. Vorrichtung nach Anspruch 4,
**dadurch gekennzeichnet,**
**dass** die Führungsarme (14) mit Handhabungsansätzen (15) zum automatischen Ein- bzw. Ausschwenken ausgerüstet sind.

6. Vorrichtung nach Anspruch 1 oder einem der folgenden,
**dadurch gekennzeichnet,**
**dass** zur Fixierung einzelner Tragplatten (5) aneinander im Wesentlichen U-förmige Fixierklammern (13) vorgesehen sind, deren U-Schenkel je in eine benachbarte Tragplatte (5) zur Fixierung eingreift.

7. Vorrichtung nach Anspruch 6,
**dadurch gekennzeichnet,**
**dass** am U-Steg der Fixierklammer (13) Handhabungsansätze für einen die Tragplatten zusammenfügenden oder trennenden Handhabungsroboter od. dgl. vorgesehen sind.

8. Vorrichtung nach Anspruch 1 oder einem der folgenden,
**dadurch gekennzeichnet,**
**dass** jede Tragplatte (5) mit einer individuellen Kennzeichnung, mit einem Barcode (17) od. dgl., ausgerüstet ist, die Vorrichtung mit einer die Kennzeichnung erfassenden Einrichtung, z.B. einem Barcodelesegerät (18), ausgerüstet ist, und dass eine Steuereinheit vorgesehen ist, die aufgrund vorgegebener Einsatzdaten die Tragplatten zu indivuellen Einheiten zusammenfasst und/oder die Tragplattenverbände auflöst.

## Claims

1. Apparatus (1) for bringing together groups (2), such as, for example, packaging units, small containers, accommodating trays or the like, said apparatus having at least two paths (7, 7a) supplying the groups (2) that are to be brought together and one path (8) conveying the groups (2) onward, wherein the apparatus (1) is provided with chain-guided rods (3) on the outside edge that are continuously circulating and with displaceable support plates (5) that are located on and/or between the rods (3), wherein guide rails (6) or the like are provided between the upper run and the lower run of the circulating chain/rod conveyor for performing a transverse movement of the individual support plates (5), **characterized in that** at least some of the support plates (5) are provided with exchangeable elements (10, 14) engaging in the guide rails (6) and that adjacent support plates (5) are provided with fixing means (13) so as to form larger support plate units together.

2. Apparatus according to Claim 1, **characterized in that** the exchangeable engaging elements (10, 14) are realized on the support plates (5a) as journals (10) engaging in guide rails (6) that are U-shaped when viewed in cross section.

3. Apparatus according to Claim 1 or 2, **characterized in that** the exchangeable engaging elements are realized as journals (10) that can be pushed through from the top side of the support plate (5a), said journals having a securing head, for example a bayonet closure.

4. Apparatus according to Claim 1 or one of the following, **characterized in that** the engaging elements are realized as guide arms (14) that can be pivoted out from the bottom side of the support plates (5) or can be pivoted into the same.

5. Apparatus according to Claim 4, **characterized in that** the guide arms (14) are provided with handling projections (15) for the automatic pivoting in or pivoting out.

6. Apparatus according to Claim 1 or to one of the following, **characterized in that** substantially U-shaped fixing brackets (13) are provided for fixing the individual support plates (5) together, the U-portion of said fixing bracket engaging in each adjacent support plate (5) for fixing purposes.

7. Apparatus according to Claim 6, **characterized in that** at the U-web of the fixing bracket (13) there are handling projections for a handling robot or the like to separate or join together the support plates.

8. Apparatus according to Claim 1 or one of the following, **characterized in that** each support plate (5) is provided with an individual identification, a barcode (17) or the like, the apparatus is provided with a device detecting the identification, e.g. a barcode reading device, and **in that** a control unit is provided that, on account of predetermined application data, combines the support plates to form individual units and/or dismantles the support plate combination.

## Revendications

1. Dispositif (1) pour regrouper des récipients (2) comme des unités d'emballage, des petits conteneurs, des plateaux de réception ou similaires, avec au moins deux voies (7, 7a) amenant les récipients à regrouper et une voie (8) transportant encore les récipients (2), le dispositif (1) étant équipé de barres (3) guidées par chaîne côté bord extérieur en rotation sans fin et avec des plaques de support (5) mobiles, disposées sur et/ou entre les barres (3), des rails de guidage (6) ou similaires pour l'exercice d'un mouvement transversal des plaques de support (5) individuelles, étant prévus entre le brin supérieur et le brin inférieur du convoyeur à chaîne /barre rotatif
**caractérisé en ce**
**qu'**au moins une partie des plaques de support (5) est pourvue d'éléments d'engagement (10, 14) interchangeables dans les rails de guidage (6) et en ce que des plaques de support (5) contiguës sont équipées de moyens de fixation (13) pour la formation de plus grandes unités de plaques de support les unes sur les autres.

2. Dispositif selon la revendication 1,
**caractérisé en ce**
**que** les éléments d'engagement interchangeables sont réalisés sur les plaques de support (5a) comme des tenons (10) s'engageant dans des rails de guidage (6) dont la section est en forme de U.

3. Dispositif selon la revendication 1 ou 2,
**caractérisé en ce**
**que** les éléments d'engagement interchangeables sont réalisés comme des tenons (10) pouvant traverser le côté supérieur des plaques de support (5a) avec une tête de fixation, par exemple une fermeture à baïonnette.

4. Dispositif selon la revendication 1 ou l'une quelconque des revendications suivantes,
**caractérisé en ce**
**que** les éléments d'engagement sont réalisés comme des bras de guidage (14) pouvant pivoter du côté inférieur des plaques de support (5) ou pouvant pivoter dans celles-ci.

5. Dispositif selon la revendication 4,
**caractérisé en ce**
**que** les bras de guidage (14) sont équipés de saillies de manipulation (15) pour le pivotement automatique.

6. Dispositif selon la revendication 1 ou l'une quelconque des revendications suivantes,
**caractérisé en ce**
**que** pour la fixation des plaques de support (5) individuelles les unes sur les autres, des pinces de fixation (13) essentiellement en forme de U sont prévues, dont la branche en U s'engage dans une plaque de support (5) contiguë pour la fixation.

7. Dispositif selon la revendication 6,
**caractérisé en ce**
**que** sur le dos du U des pinces de fixation (13) sont prévues des saillies de manipulation pour un robot de manipulation ou similaire séparant ou regroupant les plaques de support.

8. Dispositif selon la revendication 1 ou l'une quelconque des revendications suivantes,
**caractérisé en ce**
**que** chaque plaque de support (5) est équipée d'une caractérisation individuelle, d'un code-barres (17) ou similaire, le dispositif est équipé d'un système détectant la caractérisation par exemple un appareil de lecture de code-barres (18), et en ce qu'une unité de commande est prévue, laquelle regroupe en raison de données d'utilisation prédéfinies les plaques de support en unités individuelles et/ou détache les assemblages de plaques de support.
